# FASCICULE DE BREVET EUROPEEN

(11) **EP 0 793 190 B1**
(45) Date de publication et mention de la délivrance du brevet: **13.08.2003**
(21) Numéro de dépôt: 97200431.1
(22) Date de dépôt: 17.02.1997
(51) Int. Cl.: G06K 7/06, H04B 1/38, H04M 1/02

(54) **Lecteur de cartes pour téléphone portable et téléphone portable l'incorporant**
Lesegerät für tragbares Telefon und tragbares Telefon mit einem solchen Lesegerät
Card reader for portable telephone and portable telephone incorporating the same

(30) Priorité: 28.02.1996 FR 9602491
(43) Date de publication de la demande: 03.09.1997
(73) Titulaire: Koninklijke Philips Electronics N.V., 5621 BA Eindhoven (NL)
(72) Inventeur: De Larminat, Alain, 156, Boulevard Haussmann 75008 Paris (FR); Jubert, Laurent, 156, Boulevard Haussmann 75008 Paris (FR)
(74) Mandataire: Charpail, François

(56) Documents cités:
- EP-A- 0 556 970
- WO-A-92/05513
- DE-U- 9 012 889
- US-A- 4 891 013

## Description

La présente invention concerne un lecteur de carte électronique incorporé à un téléphone portable et destiné à la lecture d'une grande carte au format dit ISO SIM ou d'une petite carte au format dit Micro SIM, ces cartes ayant la même configuration de contacts, ce lecteur comportant une paroi avec une face support de carte directement accessible et un connecteur dont les doigts de contact font légèrement saillie au-delà de ladite face support de carte, à travers une ouverture dans ladite paroi, et un couvercle amovible dudit téléphone portable étant fixé, en position de fonctionnement, en vis-à-vis dudit lecteur de carte électronique.

L'invention concerne aussi un téléphone portable incorporant un tel lecteur.

Dans le domaine du téléphone radio cellulaire portable, notamment le GSM (Global Standard Mobile en anglais), par exemple, il est connu d'utiliser un circuit de mémoire tel qu'une carte électronique qui peut être insérée de façon amovible dans le téléphone. Des données, concernant notamment l'identité de l'utilisateur sont lues à partir de la carte qui a été insérée et utilisées ensuite lors du fonctionnement ultérieur de l'appareil.

La carte électronique peut être, par exemple, une carte dite carte à puce ou "smart-card" en anglais, au format ISO, qui est le format d'une carte de crédit habituelle et qui comporte une mémoire réalisée sous la forme d'un circuit intégré. Ce circuit et ses contacts extérieurs, ou bornes, qui affleurent à la surface de la carte n'occupent en fait, en volume et en surface, qu'une toute petite partie de cette dernière.

Dans les systèmes de télécommunications modernes, les applications liées à l'utilisation de cartes à puce vont croissant. L'une de ces applications concerne le circuit dit, en anglais Subscriber Identity Module (SIM) proposé pour le système de radiotéléphone cellulaire numérique paneuropéen. Voir à ce sujet la recommandation GSM 11.11 de l'ETSI qui décrit les spécifications et les recommandations GSM 02.17 relatives aux caractéristiques-fonctionnelles du SIM.

Deux standards mécaniques différents sont proposés pour la carte SIM GSM. Les fonctionnalités sont les mêmes pour les deux tailles mais les dimensions physiques sont différentes sauf l'épaisseur des cartes, égale à 0,8 mm. Ces deux standards sont l'ISO SIM, encore appelée grande carte dans le présente texte, aux dimensions d'une carte de crédit et la Micro SIM, ou petite carte, qui mesure 20 mm x 25 mm. L'ISO SIM est relativement grande et le besoin de cartes plus petites se fait sentir à mesure que la miniaturisation continue à réduire la taille du combiné radiotéléphonique (radiotéléphone) lui-même. La réduction de la carte au format Micro SIM est favorable à cet effort de miniaturisation.

En principe un radiotéléphone est conçu pour recevoir l'une ou l'autre des deux cartes SIM précitées qui seront appelées à coexister. Pour une plus grande souplesse d'utilisation, il est souhaitable de concevoir un radiotéléphone apte à recevoir l'une ou l'autre carte SIM. Ceci peut s'avérer nécessaire lorsqu'on souhaite prêter son radiotéléphone à une personne qui a une carte SIM d'un autre format que celle du propriétaire de l'appareil. Une solution à ce problème technique est connue, notamment du brevet européen No 0 556 970 A1. Le radiotéléphone qui y est décrit comporte un adaptateur qui, lorsque disposé en mode de lecture d'une carte à puce, au format le plus grand, est placé dans une cavité de façon à ne pas faire obstacle au passage de la carte, et qui, lorsque disposé en mode de lecture d'une carte Micro SIM, ou format le plus petit, bascule au moyen d'une liaison à pivot et plaque les bornes de contact de la carte. contre les doigts correspondants du lecteur de carte 'électronique. La liaison à pivot mise en oeuvre présente un inconvénient : lors du basculement de l'adaptateur, celui-ci fait saillie avec le corps de l'appareil et devient alors vulnérable aux chocs. Par ailleurs, cette solution n'est pas favorable à un encombrement réduit, dans le lecteur du radiotéléphone, puisque ce dernier est apte à contenir les deux cartes en même temps, la grande en position de lecture et la petite en position de rangement, les deux étant superposées.

Un but de l'invention est de fournir, dans un lecteur de carte ISO SIM, des moyens d'adaptation simples et robustes pour carte Micro SIM qui n'accroissent pas dans ce dernier, l'encombrement prévu pour la mise en place d'une carte au format ISO SIM.

Un autre but de l'invention est que des moyens d'adaptation pour carte Micro SIM soient toujours présents, de façon inamovible, dans un lecteur de carte électronique.

Encore un autre but de l'invention est de fournir de façon simple et économique une mise en place précise en position de lecture d'une carte Micro SIM dans un lecteur de carte électronique.

Selon l'invention ces buts sont atteints et les inconvénients de l'art antérieur sont atténués ou supprimés grâce au fait que le lecteur défini dans le paragraphe introductif est remarquable en ce que, pour la fixation en position de lecture de ladite petite carte Micro SIM, ladite paroi comporte des doigts de calage rendus escamotables par des moyens élastiques en direction et jusqu'au plan de ladite face support de carte qu'ils traversent et qui, au repos, font saillie au-delà de ladite face support de carte de façon à pouvoir emprisonner latéralement, sur ses différents côtés, ladite petite carte Micro SIM avec un léger jeu, à coïncidence de contacts avec les doigts dudit connecteur, ledit couvercle, en fonctionnement, pressant ladite carte contre ladite face support et ses contacts contre les doigts coïncidents dudit connecteur.

Selon un premier mode de réalisation préféré de l'invention, lesdits doigts de calage traversent avec un faible jeu latéral ladite paroi et sont solidaires, en dessous de la paroi d'une pièce d'adaptation qui est maintenue plaquée contre la paroi par lesdits moyens élastiques. Par exemple, les moyens élastiques prennent appui sur un circuit imprimé sous-jacent à ladite paroi et qui, entre autres composants, comporte ledit connecteur, et ils peuvent consister en plusieurs excroissances amincies et ainsi rendues élastiques de la pièce d'adaptation elle-même.

Selon un deuxième mode de réalisation préféré de l'invention, lesdits doigts de calage consistent en des doigts élastiques, pratiqués dans ladite paroi par entaillage de cette dernière et dont l'extrémité libre est légèrement relevée, au repos, au-dessus, c'est-à-dire vers l'extérieur de ladite face support de carte.

Pour obtenir une bonne coïncidence entre les contacts plats de la carte et les contacts à doigts du connecteur, il est avantageux de réaliser ladite paroi par moulage par injection.

La description qui suit en regard des dessins annexés le tout donné à titre d'exemple non limitatif fera bien comprendre comment l'invention peut être réalisée.

La figure 1 est une vue en perspective éclatée avec arrachement, d'un premier mode de réalisation de l'invention.

La figure 2 est une coupe transversale d'avant en arrière montrant la mise en place de la petite carte conformément au premier mode de réalisation de la figure 1.

La figure 3 montre, selon le même mode de représentation qu'à la figure 2, la mise en place de la grande carte, conformément au premier mode de réalisation de la figure 1.

La figure 4 est une vue en perspective avec arrachement d'un deuxième mode de réalisation de l'invention.

La figure 5 représente, en perspective éclatée, un téléphone portable incorporant un lecteur de carte électronique selon le premier mode de réalisation de la figure 1.

Sur les figures les mêmes références représentent les mêmes éléments avec les mêmes fonctions.

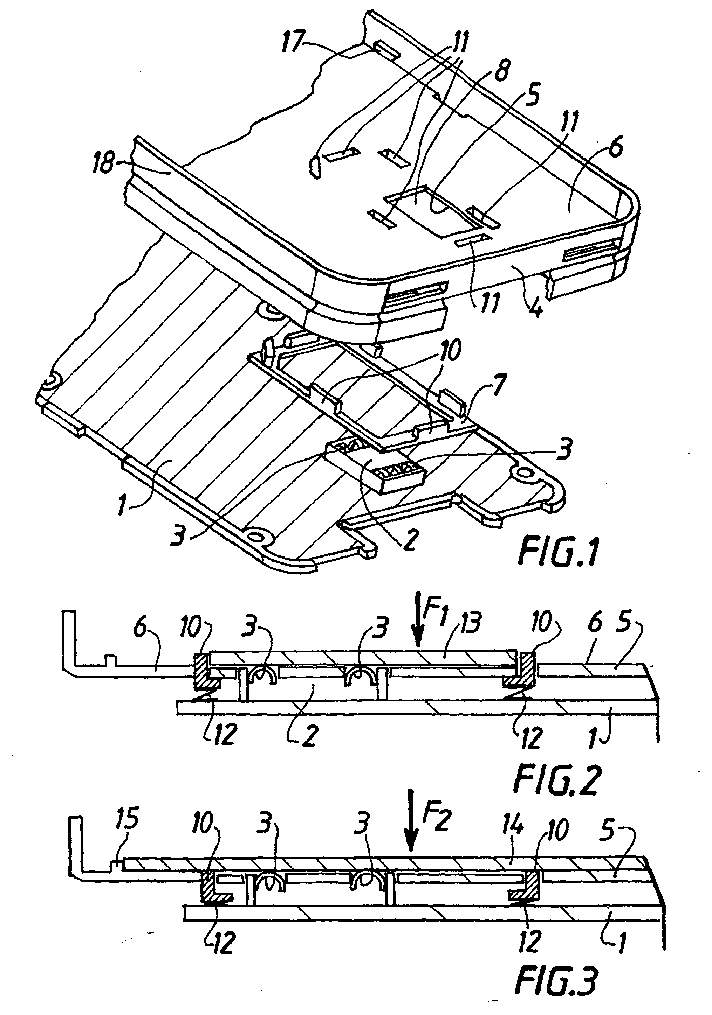

De l'appareil électronique représenté à la figure 1, par exemple un téléphone portable, est seulement illustré un lecteur de carte électronique, destiné à la lecture d'une grande ou d'une petite carte électronique (non représentées). A cet effet, à une carte de circuit imprimé 1 est fixé (entre autres composants non représentés) un connecteur 2 muni de doigts de contact à ressort tels que 3. Un châssis 4 est muni d'une paroi 5 avec une face externe plane 6. Des doigts de calage 10 qui, selon un premier mode de réalisation de l'invention, sont solidaires d'une pièce d'adaptation 7, sont destinés, comme représenté à la figure 2, à maintenir en position de lecture une petite carte électronique, dite carte Micro SIM lorsque l'appareil est un téléphone portable, la grande carte étant alors une carte dite carte à puce, au format d'une carte de crédit et dénommée ISO SIM ou encore Full SIM. Lorsque la carte de circuit imprimé 1 est montée sur le châssis 4, les doigts de contact 3 font légèrement saillie vers l'extérieur, au-delà de la face 6, à travers une ouverture 8 dans la paroi 5. De façon comparable, les doigts de calage 10 dépassent légèrement de la face 6, ayant traversé avec un léger jeu latéral des ouvertures 11 qui leur sont destinées dans la paroi 5. La pièce d'adaptation 7, par exemple réalisée en polyacétate, est alors enfermée entre le circuit imprimé 1 et la paroi 5 et maintenue plaquée contre cette dernière par des moyens élastiques par exemple tels que représentés schématiquement en 12 aux figures 2 et 3. La pièce d'adaptation 7, de préférence fermée sur elle-même, peut être réalisée en métal léger ou, de préférence, en matière plastique et les moyens élastiques peuvent consister en des excroissances amincies, élastiques, tournées vers le circuit imprimé 1 et qui font partie intégrante de la pièce d'adaptation 7.

Sur la figure 2, les doigts de calage 10 encadrent par leurs extrémités une carte Micro SIM 13, avec un léger jeu latéral, à coïncidence de contacts avec les doigts 3 du connecteur 2. Une force, dans le sens de la flèche F1 est exercée contre la petite carte 13 pour maintenir en place cette dernière tout en assurant de bons contacts électriques à pression entre le connecteur 2 et la petite carte 13. La force F1 est par exemple obtenue lors de la fermeture d'un couvercle, non représenté, contre le châssis 4.

A la figure 3, la petite carte Micro SIM a été remplacée par une grande carte ISO SIM 14, les deux cartes ayant d'ailleurs la même épaisseur égale à 0,8 mm. Pour sa mise en place, la grande carte est guidée latéralement par une nervure 15 sur la paroi 5 et par le bord relevé 18 du châssis (figure 1) qui l'encadre exactement, après qu'elle a été glissée sous des ergots 17. La force à exercer dans le sens de la flèche F2, pour achever le calage correct de la carte, est supérieure à celle relative à la flèche F1 (figure 2) car, outre la force élastique des doigts de contact 3, elle doit vaincre aussi celle des doigts de calage 10 jusqu'à ce que ces derniers soient entièrement escamotés dans et sous la paroi 5.

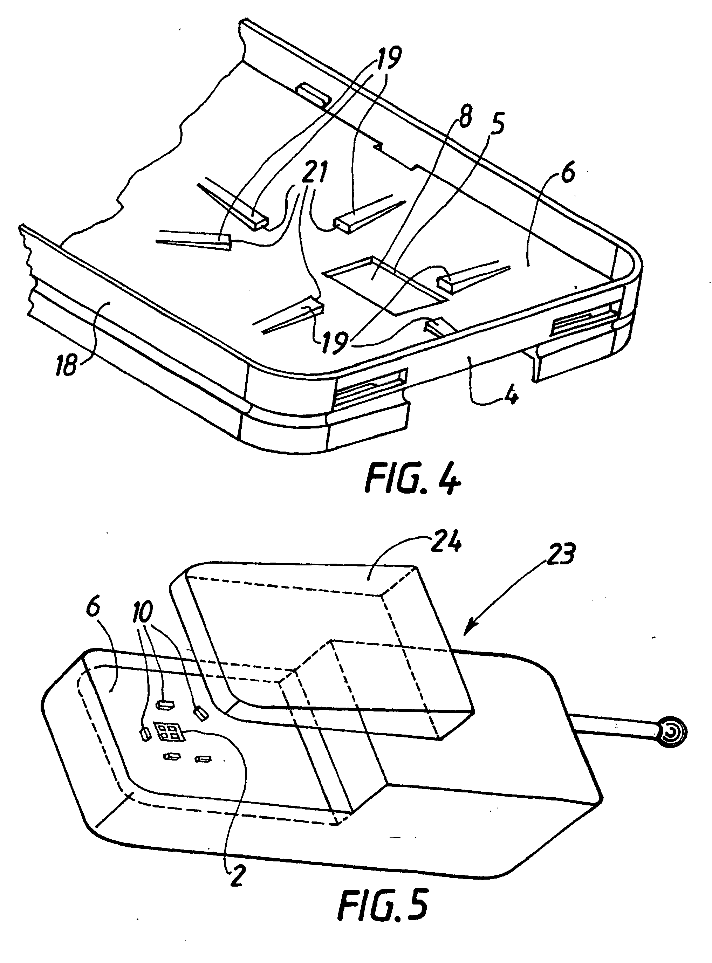

A la figure 4 est simplement représenté le châssis 4 du lecteur de carte électronique avec la paroi 5 munie de la face 6, du bord relevé 18 et de l'ouverture 8. Pour ce deuxième mode de réalisation de l'invention, les doigts de calage consistent en des doigts élastiques 19 pratiqués à même la paroi 5 par entaillage de cette dernière. Leur extrémité libre est, en l'absence de toute sollicitation, légèrement relevée, d'environ 1 mm, au-dessus de la face support 6. Pour sa mise en place, la petite carte Micro SIM est placée entre les extrémités 21 des doigts 19. Lorsque la carte Micro SIM est remplacée par la carte ISO SIM, la pression exercée contre cette dernière dans le sens de la flèche F2 (figure 3) repousse les doigts 19 dans leurs entailles, jusqu'à escamotage complet dans la paroi 5. On notera que les doigts 19 peuvent avoir des forme différentes de celles représentées sur la figure 4, notamment des formes coudées. Par ailleurs, l'entaillage de la paroi 5, pour la réalisation des doigts 19 peut fragiliser cette dernière. Pour compenser cet effet indésirable, on peut prévoir d'augmenter légèrement l'épaisseur de la paroi par rapport à celle du premier mode de réalisation.

De préférence, pour les deux modes de réalisation, la paroi 5 est réalisée par moulage par injection, de polycarbonate par exemple.

La figure 5 est une vue schématique en perspective d'un téléphone portable 23 incorporant un lecteur de carte électronique tel que décrit ci-dessus ; en l'occurrence, c'est le premier mode de réalisation de l'invention qui a été représenté. Il permet la lecture soit d'une carte ISO SIM, soit d'une carte Micro SIM. Comme représenté, le téléphone portable 23 peut comporter un boîtier amovible 24 contenant par exemple une batterie qui sert à l'alimentation électrique de l'appareil. Le boîtier amovible 24, qui fait office de couvercle, permet un accès facile au connecteur 2 et, lorsqu'il est solidarisé avec l'appareil, ce boîtier achève le maintien en place de la carte électronique ISO SIM ou Micro SIM en position de lecture contre la face 6 de la paroi 5.

## Revendications

1. Lecteur de carte électronique incorporé à un téléphone portable et destiné à la lecture d'une grande carte au format dit ISO SIM (14) ou d'une petite carte au format dit Micro SIM (13), ces cartes ayant la même configuration de contacts, ce lecteur comportant une paroi (5) avec une face support de carte (6) directement accessible et un connecteur (2) dont les doigts de contact (3) font légèrement saillie au-delà de ladite face support de carte (6), à travers une ouverture (8) dans ladite paroi (5), et un couvercle amovible dudit téléphone portable étant fixé, en position de fonctionnement, en vis-à-vis dudit lecteur de carte électronique, **caractérisé en ce que**, pour la fixation en position de lecture de ladite petite carte Micro SIM (13), ladite paroi (5) comporte des doigts de calage (10, 19) rendus escamotables par des moyens élastiques (12) en direction et jusqu'au plan de ladite face support de carte (6) qu'ils traversent et qui, au repos, font saillie au-delà de ladite face support de carte (6) de façon à pouvoir emprisonner latéralement, sur ses différents côtés, ladite petite carte Micro SIM (13) avec un léger jeu, à coïncidence de contacts avec les doigts (3) dudit connecteur (2), ledit couvercle, en fonctionnement, pressant ladite carte contre ladite face support (6) et ses contacts contre les doigts (3) coïncidents dudit connecteur (2).

2. Lecteur de carte électronique selon la revendication 1, **caractérisé en ce que** lesdits doigts de calage (10) traversent avec un faible jeu latéral ladite paroi (5) et sont solidaires en dessous de la paroi, d'une pièce d'adaptation (7) qui est maintenue plaquée contre la paroi par lesdits moyens élastiques (12).

3. Lecteur de carte électronique selon la revendication 1, **caractérisé en ce que** lesdits doigts de calage consistent en des doigts élastiques (19), pratiqués dans ladite paroi (5) par entaillage de cette dernière et dont l'extrémité libre est légèrement relevée au repos, au-dessus de ladite face support de carte (6).

4. Lecteur de carte électronique selon la revendication 2 ou 3 dont ladite paroi est fabriquée par moulage par injection.

5. Téléphone portable incorporant un lecteur de carte électronique selon l'une des revendications 1 à 4.

## Patentansprüche

1. Elektronisches, in ein tragbares Telefon integriertes Lesegerät zum Lesen einer großen Karte im sogenannten SIM-ISO-Format (14) oder einer kleinen Karte im sogenannten SIM-Mikroformat (13), wobei diese Karten dieselbe Klemmenkonfiguration aufweisen, das Lesegerät eine Innenwand (5) mit einer direkt zugänglichen Kartenaufnahmeseite (6) und einen Anschluss (2) aufweist, dessen Kontaktfinger (3) leicht über die besagte Kartenaufnahmeseite (6) hinausragen, durch eine Öffnung (8) in der besagten Innenwand (5), und wobei eine abnehmbare Abdeckung des besagten tragbaren Telefons in Betriebsposition gegenüber dem besagten elektronischen Lesegerät befestigt wird, **dadurch gekennzeichnet, dass** für die Befestigung der besagten kleinen SIM-Mikrokarte (13) in Leseposition die besagte Innenwand (5) Klemmfinger (10, 19) aufweist, die durch elastische Vorrichtungen (12) in Richtung und bis auf die Ebene der besagten Kartenaufnahmeseite (6), die sie durchqueren, versenkbar sind und die in Ruhstellung aus der besagten Kartenaufnahmeseite (6) heraustreten, um die besagte kleine SIM-Mikrokarte (13) an ihren verschiedenen Seiten mit einem kleinen Spiel einschließen zu können, mit übereinstimmenden Kontakten mit den Fingern (3) des besagten Anschlusses (2), während beim Betrieb die besagte Abdeckung die besagte Karte gegen die besagte Trägerfläche (6) und ihre Kontakte gegen die entsprechenden Finger (3) des besagten Anschlusses (2) drückt.

2. Elektronisches Lesegerät nach Anspruch 1, **dadurch gekennzeichnet, dass** die besagten Klemmfinger (10) die besagte Innenwand (5) mit einem leichten Seitenspiel durchqueren und sie unter der Innenwand mit einem Adapterteil (7) verbunden sind, das von den besagten elastischen Vorrichtungen (12) gegen die Innenwand gedrückt und so gehalten wird.

3. Elektronisches Lesegerät nach Anspruch 1, **dadurch gekennzeichnet, dass** die besagten Klemmfinger aus elastischen Fingern (19) bestehen, die in die besagte Innenwand (5) durch Einschneiden dieser letzteren eingebracht sind und deren freies Ende in Ruhestellung leicht darüber, d.h. nach außen zur besagten Kartenaufnahmeseite (6) angehoben wird.

4. Elektronisches Lesegerät nach Anspruch 2 oder 3, deren besagte Wand im Spritzgussverfahren hergestellt wird.

5. Tragbares Telefon mit einem elektronisches Lesegerät nach einem der Ansprüche 1 bis 4.

## Claims

1. An electronic card reader incorporated in a portable telephone and intended for reading a large card of the ISO SIM format (44), or a small card of the Micro SIM format (13), these cards having the same contact configuration, this reader comprising a wall (5) with a directly accessible card supporting side (6) and a connector (2) whose contact terminals slightly protrude from said card supporting side (6) through an opening (8) in said wall (5), and in the operating position a removable cover of said portable telephone being fixed opposite said electronic card reader, **characterized in that** for holding said small Micro SIM card (13) in the reading position, said wall (5) has positioning lugs (10, 19) which can be retracted by elastic means (12) in the direction of and up to the plane of said card supporting side (6) which they pass through and which, in the rest position, protrude beyond said card supporting side so as to be able to laterally surround said small Micro SIM card (13) with a slight clearance along the various sides, so that the contact pins coincide with the terminals (3) of said connector (2), said cover, in operation, pressing said card against the supporting side (6) and the card contact pins against the coinciding terminals (3) of said connector (2).

2. An electronic card reader as claimed in Claim 1, **characterized in that** said positioning lugs (10) pass through said wall (5) with a slight lateral clearance and, below the wall, are integral with an adapter (7) which is maintained pressed against the wall by said elastic means (12).

3. An electronic card reader as claimed in Claim 1, **characterized in that** said positioning lugs consist of elastic lugs (19) provided in said wall (5) by indentations in the wall and of which the free ends are slightly raised in the position of rest above, that is, to the exterior of said card supporting side (6).

4. An electronic card reader as claimed in Claim 2 or 3, whose wall is manufactured by injection moulding.

5. A portable telephone incorporating an electronic card reader as claimed in one of the Claims 1 to 4.
